# EUROPEAN PATENT APPLICATION

(11) **EP 4 772 851 A1**
(43) Date of publication of application: **08.07.2026**
(21) Application number: 25215268.1
(22) Date of filing: 12.11.2025
(51) Int. Cl.: G01N 1/10

(54) **SAFE SAMPLING MODULE AND SAFE CHEMICAL EQUIPMENT**

(30) Priority: 03.01.2025 TW 114100374
(71) Applicant: Marketech International Corp., Tapei City 115 (TW)
(72) Inventor: CHEN, Ping-Hsu, 407 Taichung City (TW); LU, Chien-Kuo, 300 Hsinchu City (TW)
(74) Representative: Berggren Oy

(57) **Abstract**

A safe sampling module (100) includes a sampling bottle holder (110) and a cap rotating device (150). The sampling bottle holder (110) is used to fix a bottle body (610) of a sampling bottle (600), and the cap rotating device (150) is equipped above the sampling bottle holder (110) to open or close the bottle cap (620) of the sampling bottle (600). The sampling bottle holder (110) is utilized to fix the sampling bottle (600) with air pressure and the cap rotating device (150) rotates the bottle cap (620) of the sampling bottle (600) with torque generated by air pressure to open or close the bottle cap (620) of the sampling bottle (600). In addition, a safe chemical equipment (400) having the safe sampling module (100) is also disclosed herein.

## Description

### Technical Field

The present disclosure relates to a safe chemical equipment. More particularly, the present disclosure relates to a safe chemical sampling equipment.

### Background

With the booming of the domestic and international semiconductor markets in recent years, due to the demand for computers and the peripheral products thereof, the semiconductor industry has continued to expand, and created a large amount of foreign exchange earnings.

The manufacturing processes of semiconductor components are very complicated, and the technologies involved cover almost all of the most important and critical technologies and inventions of modern scientific research. Therefore, the semiconductor industry is not only a cutting-edge technology industry, but also requires a lot of money to maintain high-end research.

Due to the increasingly complicated design of semiconductor components, the manufacturing technologies of semiconductor components are becoming more sophisticated and complex, and the potential occupational hazards and property losses are becoming more serious in semiconductor processes. Chemical liquids are commonly used in processes such as epitaxy, diffusion, ion implantation, chemical vapor deposition, etching and lithography.

However, since some chemical liquids are flammable, there is a need to safely and conveniently carry out the sampling process of the chemical liquids so as to improve safety and quality in semiconductor manufacturing.

### Summary

One objective of the embodiments of the present invention is to provide a safe chemical equipment able to safely sample chemical liquids to improve the quality and safety of the semiconductor manufacturing.

To achieve these and other advantages and in accordance with the objective of the embodiments of the present invention, as the embodiment broadly describes herein, the embodiments of the present invention provides a safe sampling module including a sampling bottle holder and a cap rotating device. The sampling bottle holder fixes a sampling bottle and the cap rotating device is disposed above the sampling bottle holder to open or close a bottle cap of the sampling bottle.

In some embodiments, the safe sampling module further includes a rotating base connected to the sampling bottle holder to rotate the sampling bottle.

In some embodiments, the safe sampling module further includes a pneumatic rotary actuator connected to the rotating base to rotate the rotating base and further rotate the sampling bottle.

In some embodiments, the safe sampling module further includes a vertical moving device connected to the cap rotating device to vertically move the cap rotating device.

In some embodiments, the vertical moving device includes a pneumatic vertical cylinder to vertically move the cap rotating device by a pressured air.

In some embodiments, the safe sampling module further includes a pulley transmission system connected to the cap rotating device to open or close the bottle cap of the sampling bottle.

In some embodiments, the safe sampling module further includes a pneumatic motor connected to the pulley transmission system to drive the pulley transmission system to rotate the cap rotating device so as to open or close the bottle cap of the sampling bottle.

In some embodiments, the safe sampling module further includes a sealed housing and a double-glass isolation door installed on the sealed housing, and the sampling bottle holder and the cap rotating device are enclosed in the sealed housing and the double-glass isolation door.

In some embodiments, the safe sampling module further includes a chemical liquid outlet pipeline moving device disposed between the sampling bottle holder and the cap rotating device to allow injecting a chemical liquid into the sampling bottle.

In some embodiments, the chemical liquid outlet pipeline moving device includes an outlet pipe holder and a pneumatic horizontal mover. The outlet pipe holder fixes a plurality of chemical liquid outlet pipelines and the pneumatic horizontal mover is connected to the outlet pipe holder to move the chemical liquid outlet pipelines so as to align to the sampling bottle.

According to another aspect of the present invention, a safe chemical equipment is provided. The safe chemical equipment includes a controller and a safe sampling module. The safe sampling module is connected to the controller to control the safe sampling module by the controller. In addition, the safe sampling module includes a sampling bottle holder and a cap rotating device. The sampling bottle holder fixes a sampling bottle and the cap rotating device is disposed above the sampling bottle holder to open or close a bottle cap of the sampling bottle.

In some embodiments, the safe chemical equipment further includes a chemical liquid storage device disposed beside the safe sampling module, and the safe sampling module samples the chemical liquid from the chemical liquid storage device.

In some embodiments, the chemical liquid storage device stores flammable organic solvents and chemical reagents.

In some embodiments, the safe chemical equipment is a chemical transfer unit (CTU), a clear coupler booth (CCB) or a chemical storage equipment.

Hence, the safe sampling module and the safe chemical equipment with the safe sampling module may safely and conveniently extract chemical liquid samples, especially flammable solvents or chemical reagents, used in semiconductor production lines to enhance sampling safety and convenience so as to contribute to improved revenue and profitability in semiconductor manufacturing.

### Brief Description of the Drawings

The disclosure can be more fully understood by reading the following detailed description of the embodiment, with reference made to the accompanying drawings as follows:
Fig. 1 illustrates a perspective view of a safe sampling module according to an embodiment of the present invention;
Fig. 2 illustrates another perspective view of the safe sampling module shown in Fig. 1 from another viewing angle;
Fig. 3 illustrates a perspective view of a safe sampling module according to another embodiment of the present invention; and
Fig. 4 illustrates a perspective view of a safe chemical equipment according to yet another embodiment of the present invention.

### Detailed Description of the Preferred Embodiment

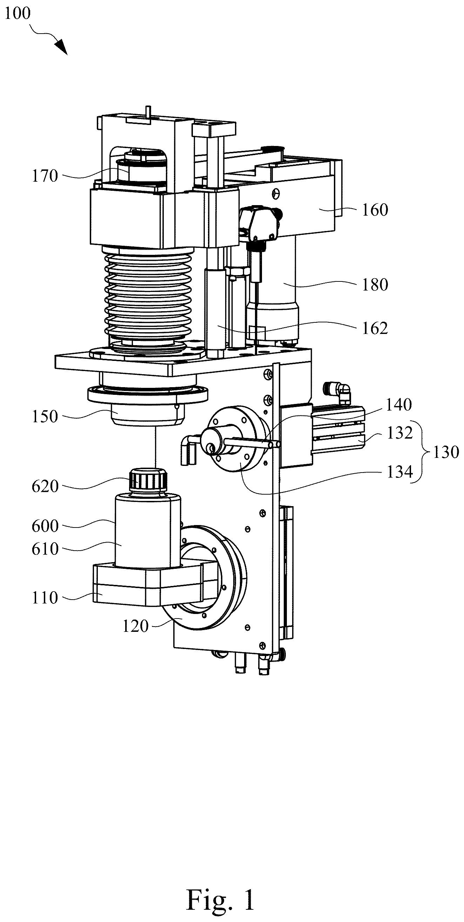

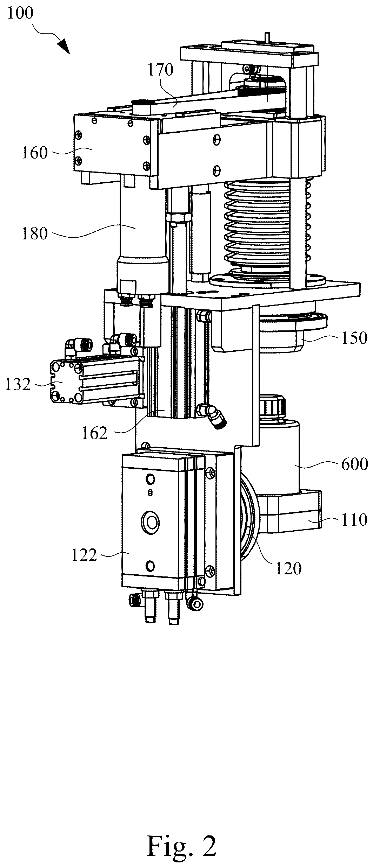

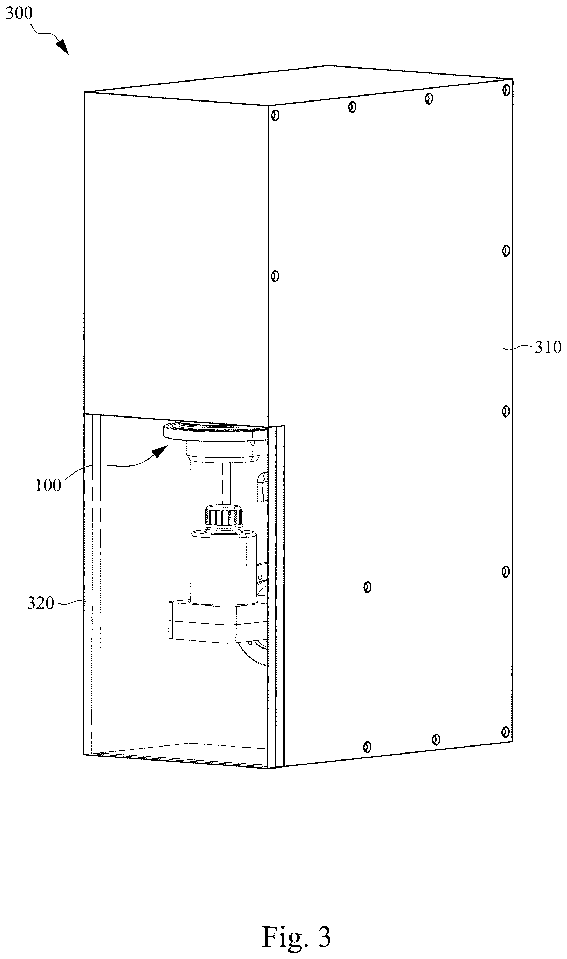

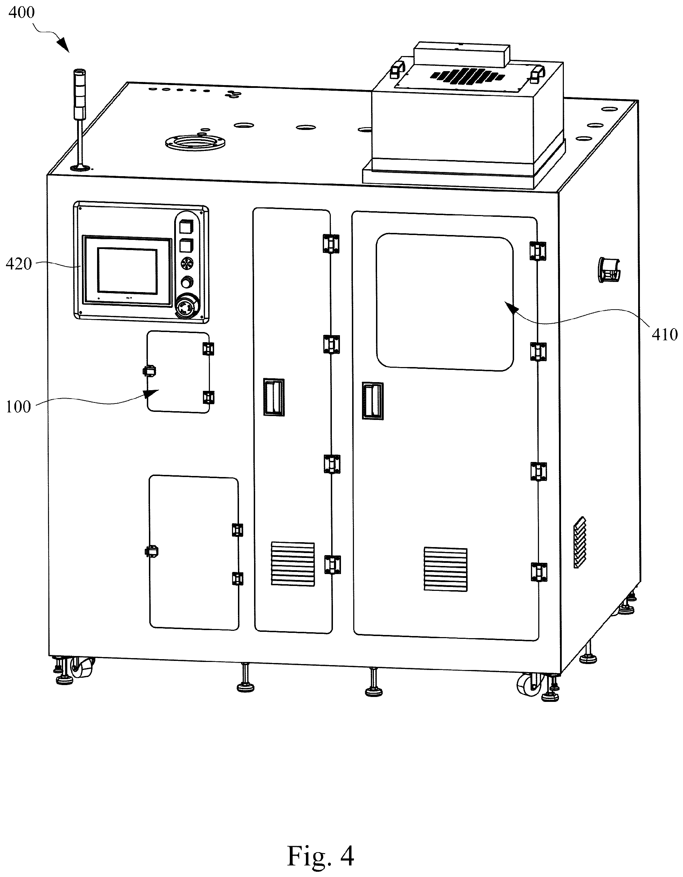

Fig. 1 illustrates a perspective view of a safe sampling module according to an embodiment of the present invention and Fig. 2 illustrates another perspective view thereof from another viewing angle. Fig. 3 illustrates a perspective view of a safe sampling module according to another embodiment of the present invention. In addition, Fig. 4 illustrates a perspective view of a safe chemical equipment according to yet another embodiment of the present invention.

Referring to Figs. 1 and 2, the safe sampling module 100 includes a sampling bottle holder 110 and a cap rotating device 150. The sampling bottle holder 110 is used to fix the bottle body 610 of a sampling bottle 600, and the cap rotating device 150 is equipped above the sampling bottle holder 110 to open or close the bottle cap 620 of the sampling bottle 600. The sampling bottle holder 110 utilizes pneumatic pressure to clamp and fix the sampling bottle 600, for example, a pneumatic ring expanded by air pressure, while the cap rotating device 150 similarly utilizes pneumatic pressure to fix the bottle cap 620, for example, a pneumatic ring expanded by air pressure, and generates torque to rotate the bottle cap 620 so as to open or close the bottle cap 620.

The safe sampling module 100 is pneumatically operated to drive and fix the sampling bottle 600 and the components thereof to effectively prevent sparks during sampling process so as to reduce operational risks and improve the safety and convenience of the sampling processes.

Therefore, the safe sampling module 100 may effectively sample the chemical liquids safely and quickly. Especially, a variety of chemicals are used in semiconductor factories due to process requirements, including hazardous and flammable chemicals like acetone and isopropyl alcohol. Improper design, operation, or control during sampling may result in serious accidents such as poisoning, fire, or explosions. Such incidents may lead to significant company losses, increased insurance premiums, or loss of orders. The safe sampling module 100 of the present invention reduces these risks and enhances the safety and efficiency of chemical sampling.

In some embodiments, the chemical liquid to be sampled may include chemical solvents, chemical reagents, or other liquids. In some embodiments, the chemical liquid may include Silane (SiH₄), phosphine (PH₃), hydrofluoric acid (HF), acetone, isopropyl alcohol, tetramethylammonium hydroxide (TMAH), nitric acid, phosphoric acid, acetic acid, hydrogen peroxide, sulfuric acid, or deionized (DI) water.

In some embodiments, the safe sampling module 100 further includes a rotating base 120 and a pneumatic rotary actuator 122. The rotating base 120 is connected to the sampling bottle holder 110 to rotate the sampling bottle 600 by predetermined angles, e.g. 10°, 20°, 30°, 45°, 90°, 120°, 150°, 180° and/or 360°. The pneumatic rotary actuator 122 is connected to the rotating base 120 so as to drive the rotating base 120 and rotate the sampling bottle 600 with the air pressure.

In some embodiments, the safe sampling module 100 may also include a vertical moving device 160 connected to the cap rotating device 150 to move the cap rotating device 150 up and down. In some embodiments, the vertical moving device 160 may include a pneumatic vertical cylinder 162 to move the cap rotating device 150 up and down using the air pressure.

In some embodiments, the safe sampling module 100 includes a pulley transmission system 170 and a pneumatic motor 180. The pulley transmission system 170 connects to the cap rotating device 150 to open or close the bottle cap 620. In addition, the pneumatic motor 180 is connected to the pulley transmission system 170 so that the pneumatic motor 180 is utilized to drive the pulley transmission system 170 to rotate the cap rotating device 150 so as to open or close the bottle cap 620.

In some embodiments, the safe sampling module 100 further includes a chemical liquid outlet pipeline moving device 130, located between the sampling bottle holder 110 and the cap rotating device 150, to align the chemical liquid outlet pipelines 140 to the sampling bottle 600 so as to inject the chemical liquid into the sampling bottle 600.

The chemical liquid outlet pipeline moving device 130 may include an outlet pipe holder 134 and a pneumatic horizontal mover 132. The outlet pipe holder 134 fixes a plurality of chemical liquid outlet pipelines 140, and the pneumatic horizontal mover 132 may adjust the position of the chemical liquid outlet pipelines 140 to align to the sampling bottle 600.

Further referring to Fig. 3, in some embodiments, the safe sampling module 300 may include the same components as the safe sampling module 100 shown in Figs. 1 and 2, and further include a sealed housing 310 and a double-glass isolation door 320. The sealed housing 310 encloses the components of the safe sampling module 100, and the double-glass isolation door 320 may effectively enhance the safety and usability while sampling chemical liquids. In some embodiments, the double-glass isolation door 320 is installed on the sealed housing 310, and the sampling bottle holder 110 and the cap rotating device 150 are completely enclosed in the sealed housing 310 and the double-glass isolation door 320. In addition, the double-glass isolation door 320 may include two layers of glass to effectively enhance the safety and usability while sampling chemical liquids.

In some embodiments, all power components within the sealed housing 310 are operated by air pressure so as to improve sampling safety.

In addition, referring to Fig. 4, a safe chemical equipment 400 includes a controller 420, a chemical liquid storage device 410, and the foregoing safe sampling module 100. The safe sampling module 100 is connected to the controller 420 so that the safe sampling module 100 may be operated by the controller 420. The chemical liquid storage device 410 may be positioned beside the safe sampling module 100 so that the safe sampling module 100 may directly sample the chemical liquid from the chemical liquid storage device 410.

In some embodiments, the chemical liquid storage device 410 may store flammable organic solvents, chemical reagents, or other chemical liquids.

In some embodiments, the safe chemical equipment 400 may be a chemical transfer unit (CTU), a clear coupler booth (CCB), or a chemical storage equipment.

Accordingly, the safe sampling module and the safe chemical equipment with the safe sampling module may safely and conveniently extract chemical liquid samples, especially flammable solvents or chemical reagents, used in semiconductor production lines to enhance sampling safety and convenience so as to contribute to improved revenue and profitability in semiconductor manufacturing.

## Claims

1. A safe sampling module (100), **characterized by** comprising:
a sampling bottle holder (110) configured to fix a sampling bottle (600); and
a cap rotating device (150) disposed above the sampling bottle holder (110) to open or close a bottle cap (620) of the sampling bottle (600).

2. The safe sampling module (100) according to claim 1, further **characterized by** comprising:
a rotating base (120) connected to the sampling bottle holder (110) to rotate the sampling bottle (600).

3. The safe sampling module (100) according to claim 2, further **characterized by** comprising:
a pneumatic rotary actuator (122) connected to the rotating base (120) to rotate the rotating base (120) and further rotate the sampling bottle (600).

4. The safe sampling module (100) according to claim 3, further **characterized by** comprising:
a vertical moving device (160) connected to the cap rotating device (150) to vertically move the cap rotating device (150).

5. The safe sampling module (100) according to claim 4, **characterized in that** the vertical moving device (160) comprises a pneumatic vertical cylinder (162) to vertically move the cap rotating device (150) by a pressured air.

6. The safe sampling module (100) according to one of claims 1 to 5, further **characterized by** comprising:
a pulley transmission system (170) connected to the cap rotating device (150) to open or close the bottle cap (620) of the sampling bottle (600).

7. The safe sampling module (100) according to claim 6, further **characterized by** comprising:
a pneumatic motor (180) connected to the pulley transmission system (170) to drive the pulley transmission system (170) to rotate the cap rotating device (150) so as to open or close the bottle cap (620) of the sampling bottle (600).

8. The safe sampling module (100) according to one of claims 1 to 7, further **characterized by** comprising:
a sealed housing (310); and
a double-glass isolation door (320) installed on the sealed housing (310), wherein the sampling bottle holder (110) and the cap rotating device (150) are enclosed in the sealed housing (310) and the double-glass isolation door (320).

9. The safe sampling module (100) according to claim 1, further **characterized by** comprising:
a chemical liquid outlet pipeline moving device (130) disposed between the sampling bottle holder (110) and the cap rotating device (150) to allow injecting a chemical liquid into the sampling bottle (600).

10. The safe sampling module (100) according to claim 9, **characterized in that** the chemical liquid outlet pipeline moving device (130) comprises:
an outlet pipe holder (134) to fix a plurality of chemical liquid outlet pipelines (140); and
a pneumatic horizontal mover (132) connected to the outlet pipe holder (134) to move the chemical liquid outlet pipelines (140) to align to the sampling bottle (600).

11. The safe sampling module (100) according to claim 8, **characterized in that** all power components within the sealed housing (310) are operated by air pressure.

12. A safe chemical equipment (400), **characterized by** comprising:
a controller (420); and
a safe sampling module (100) according to one of claims 1 to 11, wherein the safe sampling module (100) is connected to the controller (420) to control the safe sampling module (100) by the controller (420).

13. The safe chemical equipment (400) according to claim 12, further **characterized by** comprising:
a chemical liquid storage device (410) disposed beside the safe sampling module (100), wherein the safe sampling module (100) samples the chemical liquid from the chemical liquid storage device (410).

14. The safe chemical equipment (400) according to claim 13, **characterized in that** the chemical liquid storage device (410) stores flammable organic solvents and chemical reagents.

15. The safe chemical equipment (400) according to one of claims 12 to 14, **characterized in that** the safe chemical equipment (400) is a chemical transfer unit (CTU), a clear coupler booth (CCB) or a chemical storage equipment.
